# DEMANDE DE BREVET EUROPEEN

(11) **EP 0 751 337 A1**
(43) Date de publication de la demande: **02.01.1997**
(21) Numéro de dépôt: 96401210.8
(22) Date de dépôt: 06.06.1996
(51) Int. Cl.: F16L 55/027, F16L 55/033

(54) **Atténuateur de bruit pour flexible hydraulique**

(30) Priorité: 12.06.1995 FR 9506899
(71) Demandeur: HUTCHINSON, F-75008 Paris (FR)
(72) Inventeur: Drouet, Philippe, 45260 Chailly (FR); Bidault, Jean-Claude, 37270 Larsay (FR)
(74) Mandataire: Doireau, Marc

(57) **Abrégé**

Atténuateur de bruit pour flexible hydraulique, le flexible (3) étant équipé de deux raccords d'entrée et de sortie respectivement connectés à une source de fluide sous pression et à un organe commandé, et l'atténuateur de bruit est constitué par un élément tubulaire souple (5) destiné à être introduit librement dans le flexible (3), une extrémité (5a) de l'élément tubulaire (5) étant fixée directement ou indirectement au raccord d'entrée du flexible, caractérisé en ce que l'extrémité libre (5a) de l'élément tubulaire (5) est équipée d'un dispositif de positionnement (10) pour assurer le centrage de cette extrémité libre (5a) à l'intérieur du flexible (3).

## Description

La présente invention concerne une atténuateur de bruit pour flexible hydraulique, ce flexible étant équipé de deux raccords d'entrée et de sortie respectivement connectés à une source de fluide sous pression et à un organe commandé, et l'atténuateur de bruit est constitué par un élément tubulaire souple destiné à être introduit librement dans le flexible, avec l'une de ses extrémités qui est fixée directement ou indirectement au raccord d'entrée du flexible, alors que son autre extrémité est flottante à l'intérieur du flexible.

L'élément tubulaire de l'atténuateur de bruit est constitué soit par une gaine métallique souple perméable au fluide et qui est spiralée de façon hélicoïdale, soit par un tube souple en matière plastique qui est percé de trous de passage en des emplacements prédéterminés.

La gaine souple métallique ou le tube en matière plastique est inséré librement à l'intérieur du flexible par l'extrémité de celui-ci qui correspond à l'entrée du fluide, et le dispositif de raccordement qui sert à fixer cette extrémité du flexible peut être également utilisé pour fixer une extrémité de la gaine ou du tube, alors que l'autre extrémité de la gaine ou du tube est libre ou flottante à l'intérieur du flexible. Le fluide s'écoule au travers de la gaine ou du tube et une partie du fluide traverse la gaine ou le tube pour s'écouler dans l'espace annulaire délimité entre la paroi interne du flexible et la paroi externe de la gaine ou du tube.

Un tel atténuateur de bruit est notamment décrit dans le document US-A-5,201,343 mais il présente certains inconvénients. En effet, l'extrémité libre de l'atténuateur de bruit étant flottante, cela tend à provoquer une usure du flexible par suite des vibrations dues à l'écoulement du fluide sous pression, vibrations qui entraînent des chocs répétés entre l'extrémité libre de l'atténuateur et la paroi interne du flexible. Une telle usure peut se traduire par une amorce de fuite et, à terme, par une rupture du flexible.

Lorsque l'état de surface de la gaine ou du tube de l'atténuateur de bruit n'est pas parfaitement lisse, c'est-à-dire qu'il présente des points de surface, il est connu d'équiper l'extrémité de la gaine ou du tube par un embout pour éviter que ces points de surface ne viennent contribuer à l'usure de la paroi interne du flexible. Cependant, une telle solution s'avère insuffisante, car un risque d'usure demeure par suite des chocs répétés de cet embout contre la paroi interne du flexible lorsque le fluide sous pression s'écoule dans le flexible.

Le but de l'invention est de pallier ces inconvénients de la technique antérieure et de proposer une solution capable de résoudre efficacement le problème de l'usure du flexible qui résulte du montage flottant de l'extrémité libre de l'atténuateur de bruit monté à l'intérieur de ce flexible.

A cet effet, l'invention propose un atténuateur du type précité et qui est caractérisé en ce que l'extrémité libre de l'élément tubulaire de l'atténuateur est équipée d'un dispositif de positionnement pour centrer cette extrémité libre à l'intérieur du flexible pour amortir les vibrations de cette extrémité libre lorsque le fluide s'écoule.

Selon un mode de réalisation de l'invention, le dispositif de positionnement de l'extrémité libre de l'atténuateur de bruit est constitué d'une bague en un matériau élastiquement déformable rapportée sur un embout fixé autour de l'extrémité libre de l'atténuateur, le diamètre externe de la bague étant légèrement inférieur au diamètre interne du flexible.

En variante de ce premier mode de réalisation, la bague est traversée axialement par des ouvertures qui sont réalisées sous la forme d'encoches prévues à sa périphérie, par exemple.

Selon un autre mode de réalisation de l'invention, le dispositif de positionnement de l'extrémité libre de l'atténuateur est constitué d'au moins un joint torique monté autour d'un embout fixé autour de l'extrémité libre de l'atténuateur.

En variante de ce mode de réalisation, le joint torique est un joint racleur.

D'une manière générale, l'embout du dispositif de positionnement qui supporte la bague ou le joint, s'étend axialement au-delà de l'extrémité libre de l'atténuateur, est de forme tubulaire et a un diamètre interne calibré.

Dans tous ces modes de réalisation, la bague ou le joint est en un matériau élastomère comme du caoutchouc ou en un matériau plastique comme du TEFLON®, par exemple.

Un atténuateur de bruit selon l'invention contribue à améliorer les caractéristiques phoniques tout en limitant les phénomènes d'usure qui étaient observés, dans les atténuateurs connus, par suite des chocs répétés de l'extrémité libre de l'atténuateur contre la paroi interne du flexible.

Selon un autre avantage de l'invention, le positionnement de l'extrémité libre de l'atténuateur est obtenu avec des moyens simples et peu coûteux.

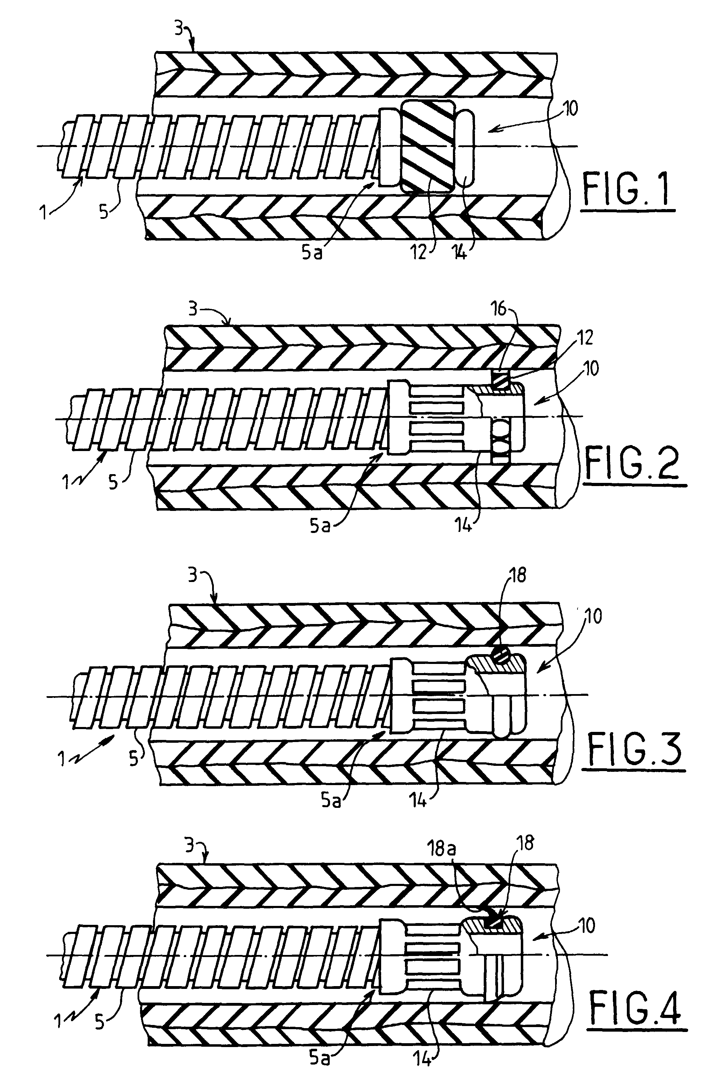

D'autres avantages, caractéristiques et détails de l'invention ressortiront de la description explicative qui va suivre faite en référence aux dessins annexés, donnés uniquement à titre d'exemple et dans lesquels les figures 1 à 4 sont des vues en coupe schématiques, avec arrachements partiels, de quatre modes de réalisation d'un atténuateur de bruit selon l'invention.

Un atténuateur de bruit 1 pour un flexible haute pression 3 utilisé notamment dans le domaine de l'industrie automobile, est constitué d'un élément tubulaire souple telle qu'une gaine métallique 5 spiralée hélicoïdalement. Cette gaine 5 est destinée à être mise en place librement dans le flexible 3 qui est équipé de deux raccords d'entrée et de sortie (non représentés) à ses deux extrémités. Le raccord d'entrée est connecté à une source de fluide sous pression, alors que le raccord de sortie est connecté à un organe commandé. Une extrémité de la gaine 5 de l'atténuateur de bruit 1 est fixée directement ou indirectement au raccord d'entrée du flexible 3, alors que son autre extrémité 5a était jusqu'à présent montée de manière flottante à l'intérieur du flexible 3.

Selon l'invention, l'atténuateur de bruit 1 est équipé d'un dispositif de positionnement 10 pour centrer et maintenir en place l'extrémité libre 5a de la gaine 5.

Un tel dispositif de positionnement 10 va être décrit ci-après en référence aux différentes figures.

Selon un mode de réalisation de l'invention illustré à la figure 1, le dispositif de positionnement 10 de l'extrémité libre 5a de la gaine 5, est constitué d'une bague 12 en un matériau élastiquement déformable. Cette bague 12 est rapportée sur un embout 14 qui est fixé autour de l'extrémité libre 5a de la gaine 5, par sertissage, surmoulage ou collage par exemple. Le diamètre externe de cette bague 12 est légèrement inférieur au diamètre interne du flexible 3.

Selon une variante de ce mode de réalisation illustrée à la figure 2, la bague 12 est traversée axialement par des ouvertures 16 qui sont par exemple réalisées sous la forme d'encoches prévues à la périphérie de la bague 12 et régulièrement réparties autour de celle-ci.

Selon un autre mode de réalisation de l'invention illustré à la figure 3, la bague 12 est remplacée par au moins un joint torique 18 rapporté autour de l'embout 14.

L'utilisation du joint torique 18 est avantageux lorsqu'il n'y a pas suffisamment de jeu entre la gaine 5 et la paroi interne du flexible 3.

En variante de ce mode de réalisation, le joint torique 18 peut être un joint racleur avec une lèvre 18a, comme cela est illustré sur la figure 4.

L'utilisation d'un joint racleur est avantageux pour ajuster le contact avec la paroi interne du flexible 3 dans le cas où ce dernier est amené à subir des variations importantes en expansion volumétrique.

D'une manière générale, l'embout 14 sur lequel est rapporté la bague 12 ou le joint torique 18 s'étend axialement au-delà de l'extrémité libre 5a de la gaine 5, est de forme tubulaire et son diamètre interne peut être calibré. Enfin, l'extrémité de la gaine 5 située côté entrée du fluide peut être assemblée au flexible haute pression 3 selon un procédé et un dispositif du type de ceux qui sont décrits dans le document FR-A-94 13539 au nom de la Demanderesse.

## Revendications

1. Atténuateur de bruit pour flexible hydraulique, le flexible (3) étant équipé de deux raccords d'entrée et de sortie respectivement connectés à une source de fluide sous pression et à un organe commandé, et l'atténuateur de bruit est constitué par un élément tubulaire souple (5) destiné à être introduit librement dans le flexible (3), une extrémité de l'élément tubulaire (5) étant fixée directement ou indirectement au raccord d'entrée du flexible (3), caractérisé en ce que l'extrémité libre (5a) de l'élément tubulaire (5) est équipée d'un dispositif de positionnement (10) pour assurer le centrage de cette extrémité libre (5a) à l'intérieur du flexible (3).

2. Atténuateur de bruit selon la revendication 1, caractérisé en ce que le dispositif de positionnement (10) de l'extrémité libre (5a) de l'élément tubulaire (5) est constitué d'une bague (12) en un matériau élastiquement déformable rapportée sur un embout (14) fixé autour de l'extrémité libre (5a) de l'élément tubulaire (5), le diamètre externe de la bague (12) étant légèrement inférieur au diamètre intérieur du flexible (3).

3. Atténuateur de bruit selon la revendication 2, caractérisé en ce que la bague (12) est traversée axialement par des ouvertures (16) réalisées sous la forme d'encoches prévues à la périphérie de la bague (12), par exemple.

4. Atténuateur de bruit selon la revendication 1, caractérisé en ce que le dispositif de positionnement (10) de l'extrémité libre (5a) de l'élément tubulaire (5) est constitué d'au moins un joint torique (18) monté autour d'un embout (14) fixé autour de l'extrémité libre (5a) de l'élément tubulaire (5).

5. Atténuateur de bruit selon la revendication 4, caractérisé en ce que le joint torique (18) est un joint racleur.

6. Atténuateur de bruit selon l'une quelconque des revendications 1 à 4, caractérisé en ce que l'embout (14) qui supporte le dispositif de positionnement (10) s'étend axialement au-delà de l'extrémité libre (5a) de l'élément tubulaire (5), cet embout (14) ayant une forme tubulaire et ayant un diamètre interne calibré.

7. Atténuateur de bruit selon l'une quelconque des revendications 1 à 3 ou 6, caractérisé en ce que la bague (12) est en un matériau élastomère comme du caoutchouc ou en un matériau plastique comme du TEFLON®.
